(19) Europäisches Patentamt
European Patent Office
Office européen des brevets

(11) **EP 2 778 714 B1**

(12) **EUROPÄISCHE PATENTSCHRIFT**

(45) Veröffentlichungstag und Bekanntmachung des Hinweises auf die Patenterteilung:
**12.07.2017 Patentblatt 2017/28**

(51) Int Cl.:
***G01S 13/86*** *(2006.01)*   ***G01S 13/93*** *(2006.01)*
***G08G 1/017*** *(2006.01)*   ***G01S 13/91*** *(2006.01)*

(21) Anmeldenummer: **14157618.1**

(22) Anmeldetag: **04.03.2014**

(54) **Verfahren zur Erfassung von Verkehrsverstößen in einem Ampelbereich durch Heckanmessung mit einem Radargerät**

Method for detecting traffic offences in an area with traffic lights by measuring the rear of vehicles using a radar device

Procédé d'enregistrement d'embouteillages dans une zone de feux de signalisation par le relevé des parties arrières à l'aide d'un radar

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2013 DE 102013102683**

(43) Veröffentlichungstag der Anmeldung:
**17.09.2014 Patentblatt 2014/38**

(73) Patentinhaber: **Jenoptik Robot GmbH**
**40789 Monheim (DE)**

(72) Erfinder: **Blanke, Oliver**
**40223 Düsseldorf (DE)**

(74) Vertreter: **Schaller, Renate et al**
**Patentanwälte Oehmke & Kollegen**
**Neugasse 13**
**07743 Jena (DE)**

(56) Entgegenhaltungen:
**EP-A1- 2 048 515**   **EP-A2- 2 341 367**
**US-A1- 2005 156 757**   **US-A1- 2006 066 472**

EP 2 778 714 B1

**Beschreibung**

Die Erfindung betrifft ein Verfahren zur Überwachung eines Verkehrsraumes zwecks Erfassung von Verkehrsverstößen von Fahrzeugen in einem Ampelbereich, der durch Haltelinien begrenzt ist und dessen Befahren temporär durch die Schaltung einer Verkehrsampel gestattet bzw. untersagt ist. Ein solches Verfahren ist gattungsgemäß aus der EP 2 048 515 A1 bekannt.

Generell unterscheiden sich die bekannten Verfahren zur Überwachung von Verkehrsräumen durch die Verwendung unterschiedlicher Arten von Sensoren, die entweder in den Fahrbahnbelag eingebettet (invasive Sensoren) oder oberhalb des Fahrbahnbelages (nichtinvasive Sensoren) angeordnet werden. Die invasiven Sensoren erfordern einen hohen Installationsaufwand und müssen entsprechend dem Verschleiß des Fahrbahnbelages von Zeit zu Zeit ausgetauscht werden. Sie sind außerdem nur für stationäre Anordnungen geeignet. Der damit überwachte Verkehrsraum wird durch die Anordnung der eingebetteten Sensoren begrenzt.

Anstatt in jeden einzelnen Fahrstreifen der aus mehreren Fahrstreifen bestehenden Fahrbahn, an jeweils einem vorbestimmten Ort, einen Sensor einzubetten, wird gemäß der EP 2 048 515 A1 eine Radarstrahlung im Wesentlichen horizontal zur Fahrbahn und längs zum Fahrbahnrand über alle Fahrstreifen der Fahrbahn gerichtet. Dazu wird ein winkelauflösendes Radargerät (FMCW-Radargerät) zum Senden und Empfangen von Radarstrahlung so zur Fahrbahn positioniert, dass es eine eine Radarkeule bildende Radarstrahlung mit einem Öffnungswinkel zwischen 20° und 40° unter einem horizontalen Aufstellwinkel der Radarstrahlungsachse (Symmetrielinie der Radarkeule) zum Fahrbahnrand von kleiner 45° aussendet. Das Radargerät kann entweder so angeordnet sein, dass die Fahrzeuge beim Durchfahren der Radarkeule auf das Radargerät zu fahren (zufließender Verkehr - frontmessendes Radargerät) oder so, dass sie sich von dem Radargerät entfernen (abfließender Verkehr - heckmessendes Radargerät). Der überwachte Verkehrsraum wird dabei in seiner Lage und Größe durch die Lage der Radarstrahlungsachse zum Fahrbahnrand und dem Öffnungswinkel der Radarkeule bestimmt.

Gemäß der vorgenannten EP 2 048 515 A1 wird aus den an einem Fahrzeug während der Durchfahrt durch die Radarkeule reflektierten Radarsignalen die sich über die Messdauer ändernde relative Position des Fahrzeuges zum Radargerät abgeleitet. In Kenntnis der Relativlage der Haltelinie zum Radargerät wird dann mit Hilfe der relativen Position des Fahrzeuges zum Radargerät zu mehreren Messzeitpunkten deren senkrechter Abstand zur Haltelinie ermittelt. Aus der ebenfalls abgeleiteten Geschwindigkeit für das betreffende Fahrzeug und dem senkrechten Abstand der relativen Positionen zur Haltelinie kann anschließend auf den Zeitpunkt des Passierens der Haltelinie geschlossen werden und es wird ein Foto ausgelöst, wenn dieser Zeitpunkt außerhalb der Grünphase einer der Haltelinie zugeordneten Verkehrsampel liegt.

Die eine jedem Messzeitpunkt zugeordnete Position des Fahrzeuges wird hier durch die Position eines sogenannten Auftreffpunktes erklärt, für den jeweils aus den Reflexionssignalen eine Entfernung und ein Winkel ermittelt werden.

Für den ankommenden Verkehr, bei dem die Fahrzeugfront im Reflexionsbereich der Radarstrahlung liegt, ist mit dem vorgenannten Verfahren eine zuverlässige Erfassung von Verkehrsverstößen an einer Verkehrsampel möglich, da die Fahrzeugfront, die naturgemäß als erstes die Haltelinie passiert, die Position des sogenannten Auftreffpunktes im Wesentlichen bestimmt.

Für den abfließenden Verkehr, für den mit zunehmender Nähe zur Haltelinie nur noch das Fahrzeugheck im Reflexionsbereich der Radarstrahlung liegt und damit das Fahrzeugheck die Position des sogenannten Auftreffpunktes im Wesentlichen bestimmt, werden die Verkehrsverstöße nicht erfasst, bei denen zwar die Fahrzeugfront, nicht aber bereits das Fahrzeugheck die Haltelinie zu einem Zeitpunkt, abhängig von einem vorgegebenen Schaltzustand der Verkehrsampel, passiert.

Es ist die Aufgabe der Erfindung, ein Verfahren zu finden, mit dem mit einem heckmessenden Radargerät eine genauere Prognose für das Überfahren der Fahrzeugfront eines Fahrzeuges über eine Haltelinie gegeben werden kann.

Diese Aufgabe wird für ein Verfahren zur Erfassung von Verkehrsverstößen von Fahrzeugen in einem durch eine Haltelinie begrenzten Ampelbereich durch Heckanmessung mit den nachfolgenden Verfahrensschritten gelöst.

In einem ersten Schritt wird ein FMCW-Radargerät neben einer Fahrbahn mit einem Fahrbahnrand und einem durch eine Haltelinie begrenzten Ampelbereich aufgestellt. Das FMCW-Radargerät ist dazu ausgelegt, eine Radarstrahlung auszusenden, die eine Radarkeule mit einer Radarachse bildet, und wird so zu der Fahrbahn ausgerichtet, dass die Radarkeule einen überwachten Verkehrsraum, der die Haltelinie einschließt, abdeckt. Dabei schließt die Radarachse einen spitzen, horizontalen Aufstellwinkel mit dem Fahrbahnrand ein.

Währenddessen oder anschließend, in einem zweiten Schritt, wird die senkrechte Entfernung der Haltelinie zum FMCW-Radargerät bestimmt.

In einem dritten Schritt wird eine Radarstrahlung ausgesendet und es werden Messsignale zu mehreren Messzeitpunkten (n Messzeitpunkten, wobei n eine natürliche ganze Zahl ≥3 ist), deren Zeitabstände zueinander konstant und bekannt sind, innerhalb einer Messdauer empfangen. Die Messsignale werden durch Reflexion an wenigstens einem von der Radarstrahlung angemessenen Fahrzeug verursacht, wobei pro Messzeitpunkt aus dem jeweiligen Messsignal als Messgrößen pro angemessenes Fahrzeug eine Radialgeschwindigkeit sowie eine Vielzahl von Radialentfernungen des angemessenen Fahrzeuges zum FMCW-Radargerät und von Objektwinkeln des angemessenen Fahrzeuges zu der Radarachse innerhalb eines Streubereiches abgeleitet werden können.

Der Einfachheit halber soll das Verfahren anhand nur eines angemessenen Fahrzeuges erläutert werden.

Es werden wenigstens zu einem ersten Messzeitpunkt eine spezifische Radialentfernung und ein spezifischer Objektwinkel aus der Vielzahl von abgeleiteten Radialentfernungen und abgeleiteten Objektwinkeln ermittelt, die gemeinsam eine spezifische Position des angemessenen Fahrzeuges, reduziert auf einen Punkt bezogen auf das FMCW-Radargerät, beschreiben, sowie die Radialgeschwindigkeit abgeleitet.

In Kenntnis der Ausrichtung des FMCW-Radargerätes zur Fahrbahn und zur Haltelinie, insbesondere dessen Aufstellwinkels, mit dessen Hilfe die Fahrzeuggeschwindigkeit aus der Radialgeschwindigkeit ermittelt wird, und dessen Abstand zur Haltelinie wird vorteilhaft bereits aus der zu dem ersten Messzeitpunkt bestimmten spezifischen Position und der Radialgeschwindigkeit ein Erwartungszeitpunkt, an dem die Fahrzeugfront des angemessenen Fahrzeugs die Haltelinie überqueren wird, mit Hilfe des Weg-Zeit-Gesetzes berechnet.

Die Radialgeschwindigkeit wird anschließend zu weiteren der n Messzeitpunkte aus den Messsignalen abgeleitet und es wird der Erwartungszeitpunkt immer wieder neu berechnet und so aktualisiert, sodass er dem realen Zeitpunkt, zu dem die Fahrzeugfront des Fahrzeuges die Haltelinie dann tatsächlich erreicht und der sich durch eine Änderung der Fahrzeuggeschwindigkeit ändern kann, immer näher kommt. Dabei wird der Erwartungszeitpunkt zu den Messzeitpunkten nicht mit Hilfe einer zu dem jeweiligen Messzeitpunkt ermittelten spezifischen Position bestimmt, sondern mit Hilfe von errechneten Erwartungspositionen der Fahrzeugfront zu den jeweiligen Messzeitpunkten.

Aus den aktualisierten Erwartungszeitpunkten wird mit Hilfe des Weg-Zeit-Gesetzes wenigstens ein Fotozeitpunkt iterativ berechnet, zu dem sich die Fahrzeugfront des Fahrzeuges an der wenigstens einen Fotolinie befinden wird.

Abschließend wird eine Kamera zur Herstellung wenigstens eines Beweisfotos ausgelöst, wenn der Erwartungszeitpunkt außerhalb einer Grünphase einer der Haltelinie zugeordneten Verkehrsampel liegt und sich das angemessene Fahrzeug an der Fotolinie befindet, die einen bekannten Abstand zur Haltelinie hat.

Aus der zum ersten Messzeitpunkt bestimmten spezifischen Position werden für den zweiten Messzeitpunkt eine erste Erwartungsposition und zu den weiteren Messzeitpunkten jeweils für nächste Messzeitpunkte weitere Erwartungspositionen ermittelt. Damit kann der Zeitpunkt, zu dem das angemessene Fahrzeug an der Haltelinie oder einer Fotolinie, deren Abstand zur Haltelinie bekannt ist, ankommt, unabhängig von einer sich ändernden Geschwindigkeit genau ermittelt werden. Es wird dabei von der Annahme ausgegangen, dass sich das Fahrzeug senkrecht auf die Haltelinie zu bewegt.

Alternativ können vorteilhaft auch zu den weiteren Messzeitpunkten die jeweils spezifischen Positionen bestimmt werden und daraus eine Fahrspur, die das Fahrzeug beschreibt, ermittelt werden. Es wird dann von der Annahme ausgegangen, dass sich das Fahrzeug entlang der ermittelten Fahrspur auf die Haltelinie zu bewegt. Die Prognose des Zeitpunktes, zu dem das angemessene Fahrzeug an der Haltelinie oder einer Fotolinie ankommt, ist dann noch genauer, da sie nicht nur Veränderungen der Fahrzeuggeschwindigkeit, sondern auch der Fahrspur beachtet, die von einer Geraden abweichen kann bzw. die nicht senkrecht auf die Haltelinie zu verlaufen muss.

Nachfolgend soll die Erfindung anhand von Ausführungsbeispielen näher erläutert werden. In den zugehörigen Zeichnungen zeigen:

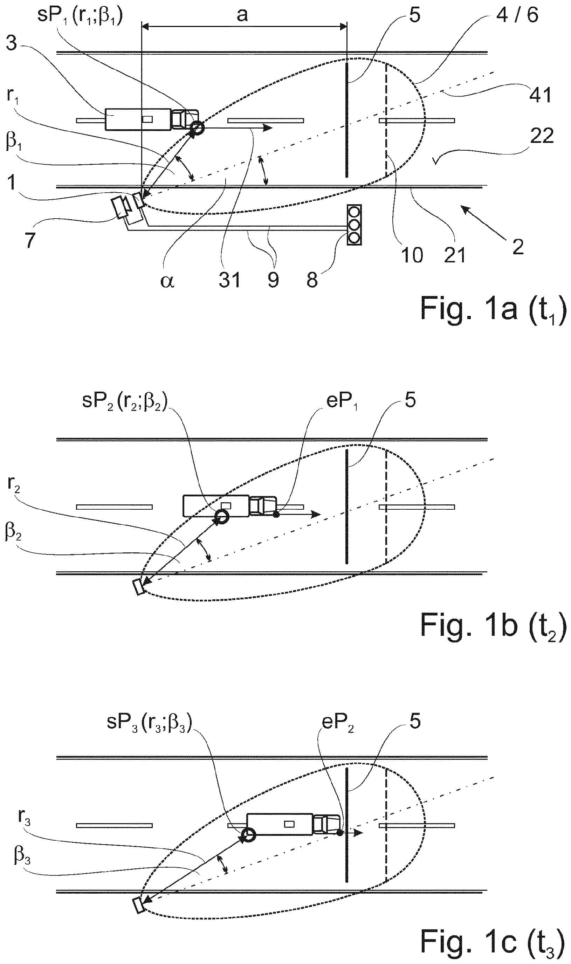

Fig. 1a   eine schematische Darstellung eines Messaufbaus zur Durchführung des Verfahrens mit einem Fahrzeug in einer ersten Position,

Fig. 1b   die Darstellung des Messaufbaus gemäß Fig. 1a mit dem Fahrzeug in einer zweiten Position und

Fig. 1c   die Darstellung des Messaufbaus gemäß Fig. 1a mit dem Fahrzeug in einer dritten Position.

Für das Verfahren zur Erfassung von Verkehrsverstößen in einem Ampelbereich, verursacht durch ein sich auf einer Fahrbahn 2 fortbewegendes Fahrzeug 3 , wird ein aus dem Stand der Technik bekanntes FMCW-Radargerät 1 (FMCW = Frequency-Modulated Continuous-Wave), vorteilhaft ein FSK-Radargerät (FSK = Frequency Shift Keying), eine Sonderform eines FMCW-Radargerätes 1, verwendet, mit dem gleichzeitig auch mehrere Fahrzeuge 3 erfasst und auch verfolgt (Tracking) werden können. Das FMCW-Radargerät 1 sendet eine eine Radarkeule 4 bildende Radarstrahlung auf mindestens zwei alternierenden Trägerfrequenzen aus und nimmt von den erfassten Fahrzeugen 3 durch Reflexion verursachte Messsignale (Dopplersignale) auf. Durch die Auswertung von Frequenzverschiebungen zwischen und innerhalb der mindestens zwei von den Fahrzeugen 3 reflektierten Trägerfrequenzen, mittels einer vom FMCW-Radargerät 1 umfassten Signalverarbeitungseinheit, können aus einem Messsignal, verursacht von einem der Fahrzeuge 3 und jeweils zu einzelnen Messzeitpunkten gebildet, eine Vielzahl von Radialentfernungen und Objektwinkeln innerhalb eines Streubereiches sowie im Wesentlichen eine Radialgeschwindigkeit abgeleitet werden. Innerhalb einer kurzen Messdauer ist damit eine gute Auflösung zwischen mehreren Fahrzeugen 3 möglich.

Die von der Radarstrahlung gebildete Radarkeule 4 wird durch Randstrahlen begrenzt, die einen spitzen Winkel miteinander einschließen und den Öffnungswinkel der Radarkeule 4 definieren. Die Winkelhalbierende des Öffnungswinkels, die auch die Symmetrielinie der Radarkeule 4 darstellt, wird als eine Radarachse 41 verstanden.

Zur Durchführung des erfindungsgemäßen Verfahrens wird das FMCW-Radargerät 1 neben der Fahrbahn 2 positioniert und zu dieser so ausgerichtet, dass ein von der Radarkeule 4 oberhalb der Fahrbahn 2 übergedeckter Verkehrsraum (überwachter Verkehrsraum 6) eine Haltelinie 5 einschließt. Der Abstand des FMCW-Radargerätes 1 zur Haltelinie 5 muss entweder entsprechend einer Vorgabe mit dem Positionieren eingestellt und überprüft werden bzw. nach dem Positionieren ermittelt werden. Diese Kenntnis kann auch durch das Anlernen des FMCW-Radargerätes 1 unmittelbar vor der Durchführung der Messung erlangt werden.

Bevorzugt ist das FMCW-Radargerät 1 neben der Fahrbahn 2 mit einem horizontalen, senkrechten Aufstellabstand zu einem Fahrbahnrand 21 und in einer Höhe mit einem vertikalen, senkrechten Aufstellabstand zu einer Fahrbahnoberfläche 22 an einem Mast montiert angeordnet. Die horizontale Ausrichtung des FMCW-Radargeräts 1 erfolgt so, dass die Radarkeule 4 im Wesentlichen in Fahrtrichtung 31 der auf der Fahrbahn 2 fahrenden Fahrzeuge 3 gebildet wird und einen überwachten Verkehrsraum 6 oberhalb der Fahrbahn 2 überdeckt, der die auf der Fahrbahn 2 vorhandene Haltelinie 5 einschließt sowie einen Bereich der Fahrbahn 2 überdeckt, indem die Fahrzeuge 3 auf die Haltelinie 5 zufahren. Dabei schließt die Radarachse 41 einen horizontalen spitzen Aufstellwinkel $\alpha$ mit einem Abschnitt des Fahrbahnrandes 21 ein, der in Abstrahlrichtung des FMCW-Radargerätes 1 verläuft. Die vertikale Ausrichtung des FMCW-Radargerätes 1 wird mit einem vertikalen spitzen Aufstellwinkel (nicht gezeigt) beschrieben, den die Radarachse 41 mit der Fahrbahnoberfläche 22 einschließt.

Aus der Position und Ausrichtung des FMCW-Radargerätes 1 und aus der Ermittlung von aus den Messsignalen erzeugten, unmittelbar ableitbaren Messgrößen (Radialgeschwindigkeit, Radialentfernungen und Objektwinkel) können weitere Merkmale für das erfasste Fahrzeug 3 abgeleitet werden, wie z. B. der Fahrstreifen in dem das Fahrzeug fährt, die Fahrspur, die das Fahrzeug beschreibt, die Fahrzeugbeschleunigung und die Fahrzeuggeschwindigkeit.

Die Fahrspur beschreibt dabei zu jedem Messzeitpunkt die tatsächliche Fortbewegungsrichtung des Fahrzeugs 3 auf der Fahrbahn 2, die nicht mit der Richtung der Radialgeschwindigkeit zum FMCW-Radargerät 1 übereinstimmen muss und außerdem, z. B. durch einen Fahrstreifenwechsel des Fahrzeugs 3, nicht zwingend dem Richtungsverlauf der Fahrbahn 2 und der hierfür generell festgelegten Fahrtrichtung 31 entsprechen muss, die parallel zum Fahrbahnrand 21 verläuft.

Die Fahrzeuggeschwindigkeit ist die tatsächliche Geschwindigkeit des Fahrzeugs 3, mit der es sich auf der Fahrbahn 2 fortbewegt.

Neben dem FMCW-Radargerät 1 bedarf es wenigstens einer Kamera 7, die vorteilhaft gemeinsam mit dem FMCW-Radargerät 1 vertikal übereinander auf einem Mast angeordnet ist, sowie Signalverbindungen 9, welche eine der Haltelinie 5 zugeordnete Verkehrsampel 8 zum einen mit der Kamera 7 und zum anderen mit einer zum FMCW-Radargerät 1 gehörenden Signalverarbeitungs- und Steuereinheit verbindet.

Zur Vorbereitung der Erfassung von Verkehrsverstößen wird das FMCW-Radargerät 1, wie bereits erläutert, so zur Fahrbahn 2 positioniert, dass sich die Fahrzeuge 3 durch die Radarkeule 4 hindurch auf die Haltelinie 5 zu bewegen. Während der Durchfahrt eines Fahrzeuges 3 empfängt das FMCW-Radargerät 1 zu einer Vielzahl von Messzeitpunkten jeweils ein Messsignal, das durch Reflexion an mit Radarstrahlung beaufschlagten und die Radarstrahlung zurückreflektierenden Oberflächen des Fahrzeuges 3 verursacht wird. Das jeweils zu einem Messzeitpunkt empfangene Messsignal ist insbesondere durch die Ausdehnung und Relativlage der Oberflächen, welche die Radarstrahlung zum FMCW-Radargerät 1 zurückreflektieren, bestimmt. So können aus den Messsignalen eine Vielzahl von Radialentfernungen und Objektwinkeln von reflektierenden Flächenbereichen innerhalb eines Streubereiches abgeleitet werden, der dann am größten ist, wenn die Radarstrahlung von der gesamten Fahrzeugseite eines langen Fahrzeuges zurückreflektiert wird. Eine Radialgeschwindigkeit hingegen kann ziemlich genau abgeleitet werden, da alle reflektierenden Flächenbereiche naturgemäß eine gleiche Geschwindigkeit haben. Ein Fahrzeug 3 bietet während der Einfahrt in die Radarkeule 4 eine zunehmend größere reflektierende Oberfläche, das heißt zunehmend mehr reflektierende Flächenbereiche. Mit zunehmenden Entfernungen der reflektierenden Auftreffpunkte zum FMCW-Radargerät 1 nimmt die zurückgestrahlte Energie mit $\frac{1}{R^4}$ ab und führt dazu, dass zum FMCW-Radargerät 1 näherliegende reflektierende Auftreffpunkte deutlich stärkere Reflexionssignale liefern als die sich entfernenden Flächenbereiche gleicher Art und Orientierung zum FMCW-Radargerät 1.

Bei der Einfahrt eines Fahrzeuges 3 in die Radarkeule 4 wird zu einem ersten Messzeitpunkt das Messsignal nur von der vorderen Fahrzeugecke auf der Beifahrerseite, die auch der Fahrzeugfront zugeordnet werden kann, gebildet, weshalb eine zu diesem ersten Messzeitpunkt gewonnene, später erläuterte, spezifische Position der Position der Fahrzeugfront entspricht. Anschließend werden Messsignale erfasst, die zunehmend von Reflexionen an der Fahrzeugflanke bestimmt werden. Spätere Messsignale werden zusätzlich zunehmend durch Reflexionen am Fahrzeugheck gebildet, bis vor Erreichen der Haltelinie 5 die Messsignale nahezu nur noch durch Reflexionen am Fahrzeugheck bewirkt werden. Die spezifische Position wandert damit während der Durchfahrt über die Fahrzeuglänge des Fahrzeuges von vorn nach hinten.

Es ist auch möglich, das FMCW-Radargerät 1 in einer größeren Höhe gegenüber der Fahrbahnoberfläche 22 an einem Mast anzubringen. Das hat den Vorteil, dass es zu wenigeren gegenseitigen Abschattungen von gleichzeitig durch die Radarkeule 4 fahrenden Fahrzeugen 3 kommt.

Um einen ausreichenden Abstand der erfassten Messsignale zu einem prinzipbedingt miterfassten Grundrauschen herzustellen und die Eindeutigkeit der Signalerfassung zu erhöhen, wird für die Signalintensität ein Schwellwert festgelegt, den das Messsignal überschreiten muss, um für eine weitere Signalverarbeitung verwendet zu werden.

Der Schwellwert kann grundsätzlich auch durch die technisch bedingte, nicht aktiv festlegbare Empfindlichkeitsgrenze des Radarsensors des FMCW-Radargerätes 1 vorgegeben sein.

Die Erfassung der Messsignale während der Durchfahrt des Fahrzeugs 3 durch die Radarkeule 4, welche die Messdauer bestimmt, erfolgt kontinuierlich zu mehreren Messzeitpunkten, zwischen denen jeweils eine konstante, bekannte Zeitdauer liegt.

In den Fig. 1a bis 1c ist eines der Fahrzeuge 3 beispielhaft zu drei verschiedenen dieser Messzeitpunkte, nämlich zu Messzeitpunkten $t_1$, $t_2$ und $t_3$ dargestellt. Die Zeitdauer zwischen den aufeinanderfolgenden Messzeitpunkten $t_1$, $t_2$, $t_3$ kann je nach erforderlicher Auflösung der Messergebnisse und den technischen Eigenschaften des FMCW-Radargerätes 1, insbesondere dessen Radarsensors und dessen Signalverarbeitungseinheit, angepasst werden.

Aus dem jeweils zu einem Messzeitpunkt erfassten Messsignal werden Messgrößen gewonnen, nämlich jeweils eine Radialgeschwindigkeit und wenigstens zu einem ersten Messzeitpunkt $t_1$ zusätzlich als spezifische Positionsgrößen eine spezifische Radialentfernung $r_1$ und ein spezifischer Objektwinkel $\beta_1$. Die spezifische Radialentfernung und der spezifische Objektwinkel werden dabei jeweils aus der Vielzahl aus einem Messsignal abgeleiteter Radialentfernungen und Objektwinkel mit einer vorgegebenen Rechenvorschrift, z. B. der arithmetischen Mittelwertbildung, errechnet. Sofern die zu einem Messzeitpunkt abgeleiteten Radialentfernungen und Objektwinkel nicht innerhalb eines Streubereiches liegen, der nur einem Fahrzeug 3 zugeordnet werden kann, kann daraus geschlossen werden, dass sie von mehreren Fahrzeugen 3 verursacht wurden. Entsprechend werden für die mehreren Fahrzeuge 3 jeweils eine spezifische Radialentfernung und ein spezifischer Objektwinkel errechnet und messzeitpunktbezogen paarweise als spezifische Position einer Radialgeschwindigkeit und einem der Fahrzeuge 3 zugeordnet. Kann diese Zuordnung über mehrere Messzeitpunkte bestätigt werden, so erhöht sich die Wahrscheinlichkeit, dass die Zuordnung bereits nach wenigen Messzeitpunkten eine hohe Zuverlässigkeit aufweist. Nachdem wenigstens einige der Messsignale einem der Fahrzeug 3 zugeordnet werden konnten, ist die Voraussetzung dafür geschaffen, das betreffende Fahrzeug 3 auf seinem weiteren Weg durch die Radarkeule 4 zu verfolgen (Tracking) und weitere Messsignale ebenfalls diesem Fahrzeug 3 zuordnen zu können.

Mit der Bildung der spezifischen Position wird das Fahrzeug 3 zu jedem Messzeitpunkt durch einen Punkt verkörpert, dessen temporäre Position zum FMCW-Radargerät 1 und zur Radarachse 41 jeweils durch die zugeordnete spezifische Radialentfernung und den zugeordneten spezifischen Objektwinkel beschrieben ist. Während der Signalverarbeitung kann die Position des Fahrzeuges 3 jeweils auf die Position dieses Punktes (spezifische Position) reduziert werden.

Unabhängig davon, mit welcher Rechenvorschrift die spezifische Position gebildet wird, beschreibt sie letztendlich den Ort des Fahrzeuges 3 auf einen Punkt reduziert, wobei dieser Punkt während der Durchfahrt durch die Radarkeule 4 von der Fahrzeugfront zum Fahrzeugheck wandert, also eine Abweichung um die Fahrzeuglänge erfährt.

Für ein sogenanntes Tracking des Fahrzeuges 3, um eine gemessene Geschwindigkeit auch sicher einem der Fahrzeuge 3 in einer Gruppe von Fahrzeugen 3 zuordnen zu können oder die Fahrspur zu ermitteln, die ein Fahrzeug 3 beschreibt, ist diese Abweichung, da sie kontinuierlich über die gesamte Durchfahrt zunimmt, vernachlässigbar.

Für die Ableitung der Radialgeschwindigkeit, über die mit Hilfe der bekannten Aufstelldaten des FMCW-Radargerätes 1 die Fahrzeuggeschwindigkeit berechnet wird, ist diese Abweichung bedeutungslos, da man voraussetzen kann, dass sich alle Flächen eines festen Körpers und damit auch die der Fahrzeuge 3 mit einer gleichen Geschwindigkeit bewegen.

Ist die Verkehrssituation so, dass sich jeweils nur ein Fahrzeug 3 in dem überwachten Verkehrsraum 6 befinden kann, dann ist es ausreichend, nur zum ersten Messzeitpunkt $t_1$ aus dem Messsignal neben der Radialgeschwindigkeit auch die spezifischen Positionsgrößen, nämlich die spezifische Radialentfernung $r_1$ und den spezifischen Objektwinkel $\beta_1$, zur Bestimmung der spezifischen Position $sP_1$ des einen der Fahrzeuge 3 abzuleiten. In Kenntnis der Aufstellparameter des FMCW-Radargerätes 1 wird aus der spezifischen Radialentfernung $r_1$ und dem spezifischen Objektwinkel $\beta_1$ ein senkrechter Abstand der spezifischen Position $sP_1$ zur Haltelinie 5 und aus der Radialgeschwindigkeit die Fahrzeuggeschwindigkeit berechnet.

Aus dem senkrechten Abstand und der Fahrzeuggeschwindigkeit wird dann unter Nutzung des Weg-Zeit-Gesetzes ein vorläufiger Erwartungszeitpunkt berechnet, zu dem die Fahrzeugfront des angemessenen Fahrzeuges 3 die Haltelinie 5 überfahren wird. Das Weg-Zeit-Gesetz (Geschwindigkeit = Weg x Zeit) ermöglicht es, ausgehend von der bekannten spezifischen Position $sP_1$, die für die Fahrzeugfront zu einem ersten Messzeitpunkt $t_1$ ermittelt wird, in Kenntnis der Fahrzeuggeschwindigkeit vorherzusagen, wann die Fahrzeugfront einen bestimmten Weg zurückgelegt hat bzw. welchen Weg sie nach einer bestimmten Zeit zurückgelegt hat.

Zu den nachfolgenden Messzeitpunkten braucht aus den Messsignalen nur die Radialgeschwindigkeit abgeleitet und in Kenntnis der Zeitdauer zwischen den aufeinanderfolgenden Messzeitpunkten ein damit aktualisierter Erwartungszeitpunkt berechnet werden. Der aktualisierte Erwartungszeitpunkt bestätigt den voraussichtlichen Erwartungszeitpunkt, wenn die Fahrzeuggeschwindigkeit konstant ist.

Ein erstes Ausführungsbeispiel wird anhand der Fig. 1a - 1c beschrieben.

Fig. 1a zeigt ein Fahrzeug 3 während des Momentes des Einfahrens in die Radarkeule 4. Zu einem ersten Messzeitpunkt $t_1$ empfängt das FMCW-Radargerät 1 ein Messsignal, aus dem wie erläutert eine Fahrzeuggeschwindigkeit, eine erste spezifische Radialentfernung $r_1$ und ein erster spezifischer Objektwinkel $\beta_1$ gewonnen werden. Das Messsignal ist ausschließlich aus Reflexionen der Radarstrahlung an der rechten vorderen Fahrzeugecke verursacht, welche die temporäre Position der Fahrzeugfront verkörpert. Aus der Kenntnis des senkrechten Abstands a der Haltelinie 5 zum FMCW-Radargerät 1, der Fahrzeuggeschwindigkeit und der ersten spezifischen Position $sP_1$ (bestimmt durch die erste spezifische Radialentfernung $r_1$ und den ersten spezifischen Objektwinkel $\beta_1$) wird ein vorläufiger Erwartungszeitpunkt mittels dem Weg-Zeit-Gesetz errechnet, an dem die Fahrzeugfront die Haltelinie 5 und/oder eine auf diese bezogene Fotolinie 10 erreichen wird. Gleichzeitig wird mittels dem Weg-Zeit-Gesetz in Kenntnis der ersten spezifischen Position $sP_1$, der Fahrzeuggeschwindigkeit zum ersten Messzeitpunkt $t_1$ und der Zeitdauer zwischen zwei aufeinanderfolgender Messzeitpunkten eine erste Erwartungsposition $eP_1$ errechnet, an der sich die Fahrzeugfront des Fahrzeuges 3 zu dem darauffolgenden zweiten Messzeitpunkt $t_2$ befindet. Dabei wird von der Annahme ausgegangen, dass sich das Fahrzeug 3 senkrecht auf die Haltelinie 5 zu bewegt. Die Anzahl der Messzeitpunkte soll für die Beschreibung des Verfahrens auf die theoretische Zahl drei beschränkt werden, liegt jedoch praktisch je nach Frequenz der Messzyklen, in Abhängigkeit von der Fahrzeuggeschwindigkeit und dem Abstand des Fahrstreifens zum FMCW-Radargerät 1, bei bis zu mehreren hundert Messzeitpunkten pro Durchfahrt.

Fig. 1b zeigt das Fahrzeug 3 zu dem zweiten Messzeitpunkt $t_2$. Aus dem zum zweiten Messzeitpunkt $t_2$ erhaltenen Messsignal wird nur die Radialgeschwindigkeit abgeleitet und es wird mittels dem Weg-Zeit-Gesetz aus der errechneten ersten Erwartungsposition $eP_1$ und der aus der abgeleiteten Radialgeschwindigkeit berechneten aktuellen Fahrzeuggeschwindigkeit sowie der Zeitdauer zwischen dem ersten und dem zweiten zwei Messzeitpunkt $t_1$, $t_2$ ein aktualisierter Erwartungszeitpunkt berechnet. Sofern zwischenzeitlich die Fahrzeuggeschwindigkeit des Fahrzeuges 3 unverändert geblieben ist, befindet sich die Fahrzeugfront tatsächlich an der zuvor berechneten ersten Erwartungsposition $eP_1$, wie hier dargestellt. Bei Veränderung der Fahrzeuggeschwindigkeit, was über die Ableitung der Radialgeschwindigkeit aus dem Messsignal zum zweiten Messzeitpunkt $t_2$ überprüft wird, befindet sich die Fahrzeugfront real vor bzw. hinter der berechneten ersten Erwartungsposition $eP_1$. Indem eine zweite Erwartungsposition $eP_2$ ausgehend von der ersten Erwartungsposition $eP_1$ für den dritten Messzeitpunkt $t_3$ anhand der zum zweiten Messzeitpunkt $t_2$ abgeleiteten Radialgeschwindigkeit bestimmt wird, nähert sich die zweite Erwartungsposition $eP_2$ wieder der realen Position der rechten Ecke der Fahrzeugfront zum dritten Messzeitpunkt $t_3$ an. Somit erfolgt eine Verfolgung der Fahrzeugfront, indem zu den Messzeitpunkten jeweils die Erwartungsposition zum nächsten Messzeitpunkt allein über die mehrfach erfasste Radialgeschwindigkeit und die bekannte, konstante Zeitdauer zwischen zwei aufeinanderfolgender Messzeitpunkten ermittelt wird.

Letztendlich wird jeweils eine n - 1-te Erwartungsposition für die Fahrzeugfront des Fahrzeuges 3 zu einem n-ten Messzeitpunkt jeweils aus einer n - 2-ten Erwartungsposition, der Zeitdauer zwischen den Messzeitpunkten und der zum n - 1-ten Messzeitpunkt abgeleiteten Radialgeschwindigkeit mit Hilfe des Weg-Zeit-Gesetzes berechnet.

Mit Hilfe der Erwartungspositionen wird zu jedem n-ten Messzeitpunkt ein Erwartungszeitpunkt, zu dem die Fahrzeugfront des angemessenen Fahrzeug 3 die Haltelinie 5 überqueren wird, aus der zu dem n-ten Messzeitpunkt bestimmten n - 1-ten Erwartungsposition und der zum n - 1-ten Messzeitpunkt abgeleiteten Radialgeschwindigkeit mit Hilfe des Weg-Zeit-Gesetzes berechnet, womit sich der berechnete Erwartungszeitpunkt dem realen Zeitpunkt, zu dem die Fahrzeugfront des angemessenen Fahrzeug 3 die Haltelinie 5 tatsächlich überquert, iterativ annähert.

Damit wird der Erwartungszeitpunkt iterativ an den tatsächlichen Zeitpunkt angenähert, zu dem die Fahrzeugfront die Haltelinie 5 oder eine Fotolinie 10 erreicht, die in einem bekannten Abstand zur Haltelinie 5 liegt. Das heißt, die Prognose wird vergleichsweise genauer. Bei Erreichen einer Fotolinie 10 durch die Fahrzeugfront kann die Kamera 7 ausgelöst werden. Die Fotolinie 10 kann vor der Haltelinie 5 liegen, um die Verkehrssituation vor dem Verstoß festzuhalten, und/oder auf bzw. hinter der Haltelinie 5, um den Verstoß zu beweisen. Selbstverständlich können für die Aufnahme der Fotos an unterschiedlichen Fotolinien 10 auch Kameras 7 mit unterschiedlicher Auflösung oder unterschiedlicher Brennweite verwendet werden.

Je kürzer die Zeitdauer zwischen den Messzeitpunkten $t_1$, $t_2$, $t_3$ ist, desto näher liegt eine Erwartungsposition $eP_1$, $eP_2$ für die Fahrzeugfront zum nächsten Messzeitpunkt an der realen Position der Fahrzeugfront des Fahrzeuges 3 zum nächsten Messzeitpunkt und um so genauer wird entsprechend die Prognose für die zeitliche Erreichung der Haltelinie 5, das heißt für den Erwartungszeitpunkt. Voraussetzung für eine genaue Prognose ist, dass das Fahrzeug 3 senkrecht auf die Haltelinie 5 zufährt, das heißt, dass die Fahrspur, welche das Fahrzeug beschreibt, eine Gerade beschreibt, die senkrecht zur Haltelinie 5 verläuft.

In einem zweiten Ausführungsbeispiel für das Verfahren werden auch zu den nachfolgenden Messzeitpunkten, hier $t_2$ und $t_3$, aus den Messsignalen die spezifischen Positionsgrößen $sP_2$ und $sP_3$ abgeleitet (siehe Fig.1b und Fig.1c) und durch ein Tracking des Fahrzeuges 3, wie es aus dem Stand der Technik bekannt ist, die jeweils temporäre Fortbewegungsrichtung des Fahrzeugs 3, die durch die Fahrspur beschrieben wird, bestimmt. Entsprechend dem ersten Ausführungsbeispiel erfolgt eine Verfolgung der Fahrzeugfront, indem zu den Messzeitpunkten $t_1$, $t_2$ jeweils die Erwartungsposition $eP_1$, $eP_2$ zum nächsten Messzeitpunkt $t_2$, $t_3$ ermittelt wird. In Kenntnis der Fahrspur wird als Weg zwischen zwei Messzeitpunkten nicht, wie im ersten Ausführungsbeispiel, eine gerade Strecke senkrecht zur Haltelinie 5 angenommen, sondern eine Strecke, die zwischen den beiden Messzeitpunkten durch die ermittelte Fahrspur beschrieben wird. Damit können die Erwartungspositionen auch dann genau bestimmt werden, wenn die Fahrspur keine Gerade ist bzw. eine Gerade ist, die nicht senkrecht zur Haltelinie 5 verläuft. In diesen Fällen ist der Weg, den das Fahrzeug 3 bis zur Haltelinie 5 zurücklegt, länger, weshalb hiermit insbesondere für Grenzfälle gesichert werden kann, dass die Kamera 7 tatsächlich nur ausgelöst wird, wenn der Verstoß gesichert erfolgt. Es wird mit dieser Ausführung des Verfahrens einer möglichen Argumentation entgegengewirkt, dass die Fahrzeugfront später an der Haltelinie 5 angekommen sein könnte als prognostiziert, weil z. B. ein Fahrstreifenwechsel stattgefunden hat.

Für eine noch genauere Prognose können bei der Berechnung des Erwartungszeitpunktes zum Erreichen der Haltelinie 5 bzw. der Erwartungspositionen zu einem jeweils nachfolgenden Messzeitpunkt die Mess- und Rechenzeit beachtet werden, die zu jedem Messzeitpunkt zwischen dem Empfang des Messsignals und dem Erhalt des Rechenergebnisses vergeht. Das heißt, als Messzeitpunkt wird nicht der Zeitpunkt betrachtet, an dem das Rechenergebnis vorliegt, sondern ein Zeitpunkt, an dem das Rechenergebnis vorliegt, abzüglich der Mess- und Rechenzeit.

Können sich aufgrund der Verkehrssituation zeitgleich mehrere Fahrzeuge 3 im überwachten Verkehrsraum 6 befinden, so werden zwingend zu den nachfolgenden Messzeitpunkten aus den Messsignalen auch die spezifischen Positionsgrößen abgeleitet, um die angemessenen Fahrzeuge 3 zu tracken und die abgeleiteten Radialgeschwindigkeiten dem verursachenden Fahrzeug 3 sicher zuordnen zu können.

Bezugszeichenliste

| 1 | FMCW-Radargerät |
|---|---|
| 2 | Fahrbahn |
| | 21 Fahrbahnrand |
| | 22 Fahrbahnoberfläche |
| | 3 Fahrzeug |
| | 31 Fahrtrichtung |
| 4 | Radarkeule |
| | 41 Radarachse |
| 5 | Haltelinie |
| 6 | überwachter Verkehrsraum |
| 7 | Kamera |
| 8 | Verkehrsampel |
| 9 | Signalverbindung |
| 10 | Fotolinie |

| a | senkrechter Abstand |
|---|---|
| $\alpha$ | horizontaler Aufstellwinkel |
| $\beta_1$ | spezifischer Objektwinkel zum ersten Messzeitpunkt |
| $r_1$ | spezifische Radialentfernung zum ersten Messzeitpunkt |
| $sP_1$ | spezifische Position zum ersten Messzeitpunkt |
| $\beta_2$ | spezifischer Objektwinkel zum zweiten Messzeitpunkt |
| $r_2$ | spezifische Radialentfernung zum zweiten Messzeitpunkt |
| $sP_2$ | spezifische Position zum zweiten Messzeitpunkt |
| $\beta_3$ | spezifischer Objektwinkel zum dritten Messzeitpunkt |
| $r_3$ | spezifische Radialentfernung zum dritten Messzeitpunkt |
| $sP_3$ | spezifische Position zum dritten Messzeitpunkt |
| $eP_1$ | erste Erwartungsposition (für die Fahrzeugfront zum zweiten Messzeitpunkt |
| $eP_2$ | Erwartungsposition für die Fahrzeugfront zum dritten Messzeitpunkt |
| $t_1$ | erster Messzeitpunkt |
| $t_2$ | zweiter Messzeitpunkt |
| $t_3$ | dritter Messzeitpunkt |

**Patentansprüche**

1.  Verfahren zur Erfassung von Verkehrsverstößen von Fahrzeugen (3) in einem durch eine Haltelinie (5) begrenzten Ampelbereich durch Heckanmessung mit folgenden Verfahrensschritten:

- Aufstellen eines FMCW-Radargerätes (1) neben einer Fahrbahn (2) mit einem Fahrbahnrand (21) und einer einen Ampelbereich begrenzenden Haltelinie (5), welches eine eine Radarkeule (4) mit einer Radarachse (41) bildende Radarstrahlung aussendet,

- Ausrichten des FMCW-Radargerätes (1), sodass ein von der Radarkeule (4) überdeckter, überwachter Verkehrsraum (6) die Haltelinie (5) vollständig abdeckt und die Radarachse (41) einen spitzen, horizontalen Aufstellwinkel (α) mit dem Fahrbahnrand (21) einschließt,

- Bestimmen eines senkrechten Abstandes (a) der Haltelinie (5) zum FMCW-Radargerät (1),

- Aussenden einer Radarstrahlung und Empfangen jeweils eines Messsignals, welches durch Reflexion an einem von der Radarstrahlung angemessenen Fahrzeug (3) verursacht wird, zu n Messzeitpunkten ($t_n$), n ≥ 3, zwischen denen eine bekannte konstante Zeitdauer liegt,

- Ableiten einer Radialgeschwindigkeit sowie einer Vielzahl von Radialentfernungen und Objektwinkeln aus dem Messsignal zu einem ersten der Messzeitpunkte ($t_1$), wobei das Messsignal zum ersten Messzeitpunkt ($t_1$) nur durch Reflexion an einer rechten vorderen Ecke einer Fahrzeugfront des Fahrzeuges (3) verursacht wird,

- Berechnen einer spezifischen Radialentfernung ($r_1$) und eines spezifischen Objektwinkels ($β_1$) aus der Vielzahl von Radialentfernungen und Objektwinkeln zur Bestimmung einer spezifischen Position ($sP_1$) der Fahrzeugfront zu dem ersten Messzeitpunkt ($t_1$),

- Berechnen einer ersten Erwartungsposition ($eP_1$) für die Fahrzeugfront des Fahrzeuges (3) zu dem zweiten der Messzeitpunkte ($t_2$) aus der zu dem ersten Messzeitpunkt ($t_1$) bestimmten spezifischen Position ($sP_1$), der Zeitdauer zwischen den Messzeitpunkten und der zum ersten Messzeitpunkt ($t_1$) abgeleiteten Radialgeschwindigkeit mit Hilfe des Weg-Zeit-Gesetzes,

- Berechnen jeweils einer n - 1-ten Erwartungsposition für die Fahrzeugfront des Fahrzeuges (3) zu jeweils einem n-ten Messzeitpunkt jeweils aus einer n - 2-ten Erwartungsposition, der Zeitdauer zwischen den Messzeitpunkten und der zum n - 1-ten Messzeitpunkt abgeleiteten Radialgeschwindigkeit mit Hilfe des Weg-Zeit-Gesetzes, wobei n≥ 3 ist,

- Berechnen jeweils eines Erwartungszeitpunktes, zu dem die Fahrzeugfront des angemessenen Fahrzeugs (3) die Haltelinie (5) überqueren wird, aus der zu dem n-ten Messzeitpunkt bestimmten n - 1-ten Erwartungsposition und der zum n-ten Messzeitpunkt abgeleiteten Radialgeschwindigkeit mit Hilfe des Weg-Zeit-Gesetzes, in Kenntnis des horizontalen Aufstellwinkels (α) und des Abstandes (a) und Annahme, dass sich das Fahrzeug senkrecht auf die Haltelinie (5) zu bewegt, womit sich der berechnete Erwartungszeitpunkt dem realen Zeitpunkt, zu dem die Fahrzeugfront des angemessenen Fahrzeug (3) die Haltelinie (5) tatsächlich überquert, iterativ annähert.

- Auslösen einer Kamera (7) zur Herstellung wenigstens eines Beweisfotos, wenn der berechnete Erwartungszeitpunkt außerhalb einer Grünphase einer der Haltelinie (5) zugeordneten Verkehrsampel (8) liegt und sich das Fahrzeug (3) an wenigstens einer Fotolinie (10), die einen bekannten Abstand zur Haltelinie (5) aufweist, befindet.

2. Verfahren nach Anspruch 1, **dadurch gekennzeichnet, dass** auch zu den weiteren Messzeitpunkten ($t_n$) die jeweils spezifischen Positionen bestimmt werden und daraus eine Fahrspur, die das Fahrzeug (3) beschreibt, ermittelt wird und von der Annahme ausgegangen wird, dass sich das Fahrzeug (3) entlang der ermittelten Fahrspur auf die Haltelinie (5) zu bewegt.

3. Verfahren nach einem der vorangehenden Ansprüche, **dadurch gekennzeichnet, dass** das Verfahren in analoger Weise zeitgleich zur Ermittlung von Erwartungszeitpunkten für mehr als ein Fahrzeug (3) durchgeführt wird, wenn zeitgleich mehr als ein Fahrzeug (3) den überwachten Verkehrsraum (6) durchfahren.

## Claims

1. A method for detecting traffic infractions by vehicles (3) in a traffic light zone defined by a stop line (5) by rear-end measurement comprising the following steps:

- setting up a FMCW radar device (1) next to a roadway (2) with a roadway edge (21) and a stop line (5) defining a traffic light zone, which FMCW radar device (1) emits a radar beam forming a radar lobe (4) with a radar axis (41),
- aligning the FMCW radar device (1) such that a monitored traffic space (6) covered by the radar lobe (4) completely covers the stop line (5) and the radar axis (41) forms an acute horizontal setup angle (α) with the roadway edge (21),
- determining a perpendicular distance (a) of the stop line (5) from the FMCW radar device (1),
- emitting a radar beam and receiving a measurement signal in each instance at n measurement times ($t_n$), n ≥ 3, between which there is a known constant time period, which measurement signal is caused by reflection at a vehicle (3) measured by the radar beam,
- deriving a radial velocity and a plurality of radial distances and object angles from the measurement signal at a first measurement time ($t_1$), wherein the measurement signal at the first measurement time ($t_1$) is caused only by reflection at a front righthand corner of a front of the vehicle (3),

- calculating a specific radial distance ($r_1$) and a specific object angle ($\beta_1$) from the plurality of radial distances and object angles for determining a specific position ($sP_1$) of the front of the vehicle at the first measurement time ($t_1$),

- calculating by means of the distance-time rule a first anticipated position ($eP_1$) for the front of the vehicle (3) at the second measurement time ($t_2$) from the specific position ($sP_1$) determined at the first measurement time ($t_1$), the time period between the measurement times and the radial velocity derived at the first measurement time ($t_1$),

- calculating an n-1st anticipated position for the front of the vehicle (3) in each instance by the distance-time rule at an nth measurement time in each instance from an n-2nd anticipated position, the time period between the measurement times and the radial velocity derived at the n-1st measurement time, where n$\geq$ 3,

- calculating by the distance-time rule an anticipated time at which the front of the measured vehicle (3) will cross the stop line (5) from the n-1st anticipated position determined at the nth measurement time and the radial velocity derived at the nth measurement time, in knowledge of the horizontal setup angle ($\alpha$) and the distance (a) and assuming that the vehicle moves towards the stop line (5) perpendicularly, so that the calculated anticipated time iteratively approaches the real time at which the front of the measured vehicle (3) actually crosses the stop line (5), and

- triggering a camera (7) to produce at least one evidentiary photograph when the calculated anticipated time is outside of a green-light phase of a traffic light (8) associated with the stop line (5) and the vehicle (3) is located at at least one photograph line (10) having a known distance from the stop line (5).

2. The method according to claim 1, **characterised in that** the respective specific positions are also determined at the further measurement times ($t_n$) and a course of travel described by the vehicle (3) is determined therefrom, and it is assumed that the vehicle (3) moves along the determined course of travel towards the stop line (5).

3. The method according to any one of the preceding claims, **characterised in that** the method is carried out in an analogous manner simultaneously for determining anticipated times for more than one vehicle (3) when more than one vehicle (3) passes through the monitored traffic space (6) at the same time.

**Revendications**

1. Procédé de détection d'infractions au trafic routier de véhicules (3) dans une zone de feu de circulation définie par une ligne d'arrêt (5), par mesure arrière, ledit procédé comportant les étapes suivantes:

- installation d'un dispositif radar FMCW (1) à côté d'une voie routière (2) avec un bord de voie routière (21) et une ligne d'arrêt (5) définissant une zone de feu de circulation, ledit dispositif émettant un rayon radar qui constitue un lobe radar (4) avec un axe radar (41),

- alignement dudit dispositif radar FMCW (1), de sorte qu'un espace de circulation (6) surveillé, couvert par le lobe radar (4), couvre complètement la ligne d'arrêt (5) et l'axe radar (41) enferme un angle d'installation horizontal aigu ($\alpha$) avec le bord de voie routière (21),

- détermination d'une distance perpendiculaire (a) de la ligne d'arrêt (5) au dispositif radar FMCW (1),

- émission d'un rayon radar et réception d'un signal de mesure à chaque fois, ledit signal étant causé par réflexion à un véhicule (3) mesuré par le rayon radar, à n moments de mesure ($t_n$), n $\geq$ 3, entre lesquels est une durée constante connue,

- dérivation d'une vitesse radiale et d'une pluralité de distances radiales et d'angles d'objet à partir dudit signal de mesure à un premier des moments de mesure ($t_1$), le signal de mesure au premier moment de mesure ($t_1$) n'étant causé que par réflexion à un coin droite avant à l'avant du véhicule (3),

- calcul d'une distance radiale spécifique ($r_1$) et d'un angle d'objet spécifique ($\beta_1$) à partir de la pluralité de distances radiales et angles d'objet pour déterminer une position spécifique ($sP_1$) de l'avant du véhicule au premier moment de mesure ($t_1$),

- calcul d'une première position anticipée ($eP_1$) pour l'avant du véhicule (3) au deuxième des moments de mesure ($t_2$), à partir de la position spécifique ($sP_1$) déterminée au premier moment de mesure ($t_1$), de la durée entre les moments de mesure et de la vitesse radiale dérivée au premier moment de mesure ($t_1$), au moyen du rapport distance/temps,

- calcul, à chaque fois, d'une n - 1-ième position anticipée pour l'avant du véhicule (3) à un n-ième moment de mesure respectif à partir d'une n - 2-ième position anticipée respective, de la durée entre les moments de mesure et de la vitesse radiale dérivée au n - 1-ième moment de mesure, au moyen du rapport distance/temps, où n$\geq$ 3,

- calcul d'un moment anticipé, à chaque fois, auquel l'avant du véhicule mesuré (3) traversera la ligne d'arrêt (5), à partir de la n-1-ième position anticipée déterminée au n-ième moment de mesure et de la vitesse radiale dérivée au n-ième moment de mesure au moyen du rapport distance/temps, en connaissance de l'angle d'installation horizontal ($\alpha$) et de la distance (a), et supposant que le véhicule roule vers la ligne d'arrêt (5) de manière perpendiculaire, de sorte que le moment anticipé calculé se rapproche itérativement du moment réel auquel l'avant du véhicule (3) mesuré traverse effectivement la ligne d'arrêt (5),
- déclenchement d'une caméra (7) afin de produire au moins une photo d'évidence lorsque le moment anticipé calculé se trouve en dehors de la phase verte d'un feu de circulation (8) attribué à la ligne d'arrêt (5) et le véhicule (3) se trouve à au moins une ligne photographique (10), située à une distance connue de la ligne d'arrêt (5).

2. Procédé selon la revendication 1, **caractérisé en ce que** les positions spécifiques sont également déterminées aux autres moments de mesure ($t_n$) et utilisées pour déterminer une voie de roulement décrite par le véhicule (3) et que l'on suppose que le véhicule (3) roule vers la ligne d'arrêt (5) sur ladite voie de roulement déterminée.

3. Procédé selon l'une quelconque des revendications précédentes, **caractérisé en ce que** le procédé est exécuté de manière analogue en même temps pour déterminer des moments anticipés pour plus d'un véhicule (3), lorsque plus d'un véhicule (3) traverse en même temps l'espace de circulation (6) surveillé.

Fig. 1a (t₁)

Fig. 1b (t₂)

Fig. 1c (t₃)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2048515 A1